# EUROPEAN PATENT APPLICATION

(11) **EP 1 382 865 A1**
(43) Date of publication of application: **21.01.2004**
(21) Application number: 03015562.6
(22) Date of filing: 11.07.2003
(51) Int. Cl.: F16B 39/28, F16B 39/30, F16B 25/00, B60T 13/52

(54) **Self-tapping screw type fastener and push rod for brake booster using the same**

(30) Priority: 16.07.2002 JP 2002206811
(71) Applicant: Bosch Automotive Systems Corporation, Tokyo 150-8360 (JP)
(72) Inventor: Uyama, Shintaro, Bosch Automotive Systems Corp., Saitama-ken 355-0021 (JP); Yamashita, Kuraji, Bosch Automotive Systems Corp., Saitama-ken 355-0021 (JP); Sugiyama, Ichiro, Crown Screw Corporation, Shiki-shi, Saitama 353-0001 (JP); Nakaizumi, Tsutomu, Crown Screw Corporation, Shiki-shi, Saitama 353-0001 (JP)
(74) Representative: VOSSIUS & PARTNER

(57) **Abstract**

A self-tapping screw type fastener of the present invention is characterized in that an external thread (7) of an adjusting rod (self-tapping screw) (5) is screwed into and fastened to an output rod (1) with tapping an internal thread (3) in an inner peripheral surface of a smooth prepared hole (2) of the output rod (1). The adjusting rod (5) has a threaded shaft (13) with the external thread (7) formed thereon and a smooth guide shaft (14) projecting from an end of the threaded shaft (13). The outer diameter (R1) of the smooth guide shaft (14) is set to be smaller than the major diameter (R4) of the external thread (7) and to be slightly larger than the minor diameter (R2) of the external thread (7) or the minor diameter (R3) of the internal thread (3). Because of the diameter difference "t" between the diameter (R1) and the diameter (R2) or (R3), a step (20) is formed so that the step comes in contact with the nearest ridge of the internal thread (3), thereby preventing the adjusting rod (5) from getting loose.

## Description

The present invention relates to a fastener in which a self-tapping screw is fastened while an internal thread is tapped by an external thread of the self-tapping screw and to a push rod using the same for a brake booster in an automotive brake system.

Conventionally, in automotive brake systems, various brake boosters have been employed which boost pedaling force exerted on a brake pedal and transmit the boosted force to a brake master cylinder in order to provide large braking force from small pedaling force. In such brake booster, the pedaling force is boosted by power. Employed as the power are negative pressure, compressed pneumatic pressure, fluid pressure and the like.

An example of the brake boosters is a vacuum booster utilizing negative pressure. In the vacuum booster, a power piston is operated by pressure difference between negative pressure obtained from an intake manifold of the engine and ambient pressure supplied through a control valve. Because of the operation of the power piston, the pedaling force is boosted so as to produce large output and the output is transmitted to the master cylinder through a push rod.

Many brake boosters including the aforementioned vacuum booster generally employ such a push rod as mentioned above. The push rod comprises an output rod which moves forward by the output of the brake booster and an adjusting rod which is screwed into an internal thread hole which is formed in a distal end portion of the output rod to extend coaxially. The length of the push rod in the axial direction is adjusted according to the depth in which the adjusting rod is screwed into the output rod so that the push rod is set to have a desired length.

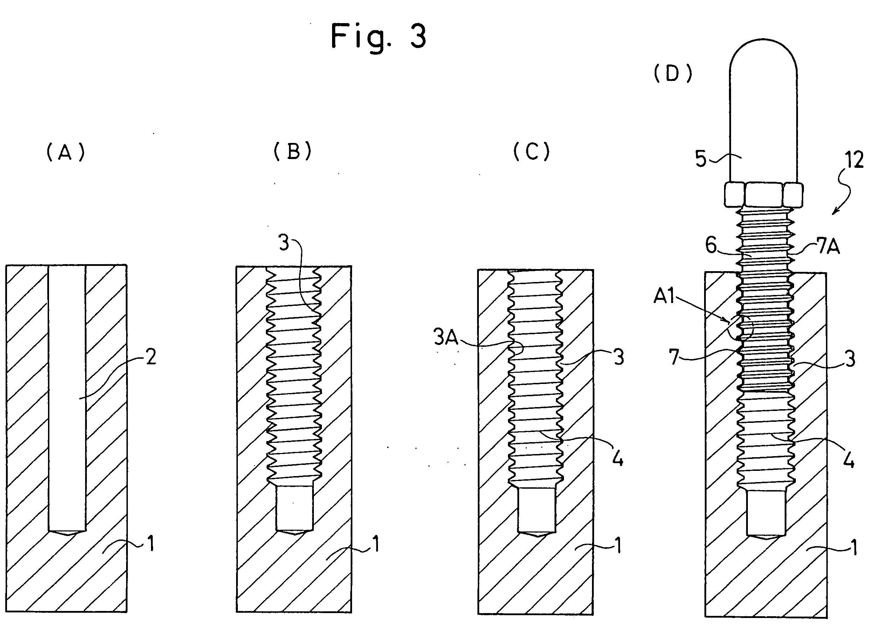

In a push rod usually employed in conventional brake boosters, the screwing between the output rod and the adjusting rod is conducted as follows. That is, as shown in Fig. 3(A), first, a smooth prepared hole 2 extending in the axial direction is formed in a distal end of the output rod 1 by drilling. Then, as shown in Fig. 3(B), a tapping tool is screwed into the smooth prepared hole 2 so as to form an internal thread 3 in the inner peripheral surface of the smooth prepared hole by means of tapping. After that, as shown in Fig. 3(C), the internal thread 3 is processed by reaming to have minor diameter which is highly precisely shaped, thereby forming an internal thread hole 4. Finally, as shown in Fig. 3(D), a threaded shaft 6 with an external thread 7 which is formed on a proximal end portion of the adjusting rod 5 is screwed into the internal thread hole 4 shaped as mentioned above to have a predetermined depth. In this manner, the screwing between the output rod 1 and the adjusting rod 5 is achieved.

In this screwing structure between the output rod 1 and the adjusting rod 5, it is required to prefinish the internal thread 3 such as the tapping and the reaming. However, there is a problem that the prefinishing requires not only considerable time but also complex working, thus leading to the increase in cost.

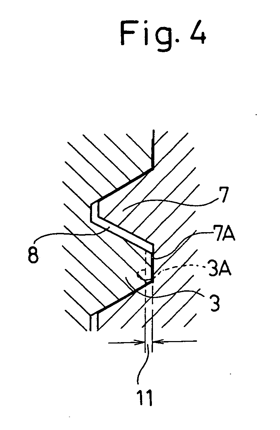

As shown in Fig. 4, a gap 8 may be created between a flank face of the internal thread 3 formed by means of tapping and a flank face of the external thread 6 of the adjusting rod 5. There is a problem that, due to the gap 8, the thread face resistance of the adjusting rod 5 is unfortunately reduced so that the screwed portion (the adjusting rod) may get loose.

Similarly, a gap 11 may also be created between the root bottom 7A of the external thread 7 and the face of the crest 3A of the internal thread 3. There is also a problem that, due to the gap 11, the looseness of the screwed portion is promoted.

To reduce the cost as resolving one of the aforementioned problems, a method proposed in Japanese Patent Unexamined Publication No. H9-58455 is screwing an external thread of the adjusting rod into a smooth prepared hole of the output rod with tapping an internal thread in the inner peripheral surface of the smooth prepared hole. The method disclosed in the aforementioned publication can reduce the cost because the prefinishing of the internal thread is simplified as compared with the conventional method, but no consideration was made for the aforementioned looseness of the screwed portion.

To reduce the looseness of the screwed portion, the following measure has been carried out conventionally. That is, a self-tapping screw has a smooth guide shaft of which diameter is less than the minor diameter of an external thread thereof and which is formed to project from the end of the external thread coaxially, thereby facilitating the tapping of an internal thread in an inner peripheral surface of a smooth prepared hole (hole before threading) of a fastening object. By inserting the smooth guide shaft into the smooth prepared hole (hole before threading) upright at the beginning of tapping, the smooth guide shaft functions as an alignment means for the self-tapping screw. With the self-tapping screw of this type, the inner peripheral surface of the smooth prepared hole (hole before threading) of the fastening object is squeezed and drawn into roots between ridges of the external thread according to the tapping, thereby forming ridges of the internal thread. In addition, the crests (tips of the ridges) of the internal thread are flatly crushed by the root bottoms, parallel to the axis, between the ridges of the external thread. Because of this crushing, the screwed portion is prevented from getting loose.

In case that the screwed portion is prevented from getting loose only by flatly crushing the crests of the internal thread by the root bottoms between the ridges of the external thread, however, fastening torque enough for a fastening object, such as a push rod of a brake booster, which is subjected to impact intermittently can not be obtained. The screwed portion may get loose with time. Therefore, the prevention of looseness of the screwed portion by flatly crushing the crests is hardly applied to push rods for brake boosters.

It is an object of the present invention to provide a self-tapping screw type fastener comprising a first rod and a second rod which are screwed into and fastened to each other and capable of securely preventing the screwed portion between the first rod and the second rod from getting loose with time.

It is another object of the present invention to provide a push rod capable of preventing the screwed portion between an output rod and an adjusting rod from getting loose with age even though it is subjected to impact intermittently.

To achieve the objects, a self-tapping screw type fastener of the present invention comprises: a first rod and a second rod which is screwed into and fastened to the first rod, has an external thread, and functions as a tapping screw, wherein the external thread of said second rod is screwed into a smooth prepared hole of said first rod with tapping an internal thread in the inner peripheral surface of the smooth prepared hole, thereby fastening said second rod to said first rod, and is characterized in that said second rod has a threaded shaft having said external thread and a smooth guide shaft projecting from the end of the threaded shaft coaxially with the threaded shaft; the outer diameter of said smooth guide shaft is set to be smaller than the major diameter of said external thread and to be larger than the minor diameter of said external thread and the minor diameter of said internal thread so as to form a step at a connecting portion between said smooth guide shaft and said threaded shaft; and the step of said smooth guide shaft is in contact with the nearest ridge of said internal thread relative to said smooth guide shaft, thereby preventing said second rod from getting loose.

Further, the self-tapping screw type fastener of the present invention is characterized in that said internal thread is formed by squeezing the inner peripheral surface into roots of said external thread by said tapping and crests of said internal thread are flatly crushed by root bottoms, parallel to said axis, of said external thread, thereby preventing said second rod from getting loose.

In addition, a push rod for brake boosters of the present invention is used in a brake booster which boosts pedaling force exerted on a brake pedal to output the boosted force, said push rod comprising an output rod and an adjusting rod which is screwed into and fastened to said output rod, has an external thread, and functions as a tapping screw, wherein the external thread of said adjusting rod is screwed into a smooth prepared hole of said output rod with tapping an internal thread in the inner peripheral surface of the smooth prepared hole, thereby fastening said adjusting rod to said output rod and said push rod transmits the output of said brake booster to a brake master cylinder. The push rod is characterized in that said adjusting rod has a threaded shaft having said external thread and a smooth guide shaft projecting from the end of the threaded shaft coaxially with the threaded shaft; the outer diameter said smooth guide shaft is set to be smaller than the major diameter of said external thread and to be larger than the minor diameter of said external thread and the minor diameter of said internal thread so as to form a step at a connecting portion between said smooth guide shaft and said threaded shaft; and the step of said smooth guide shaft is in contact with the nearest ridge of said internal thread relative to said smooth guide shaft, thereby preventing said adjusting rod from getting loose.

Further, a push rod for brake boosters of the present invention is used in a brake booster which boosts pedaling force exerted on a brake pedal to output the boosted force, said push rod comprising an output rod and an adjusting rod which is screwed into and fastened to said output rod, has an external thread, and functions as a tapping screw, wherein the external thread of said adjusting rod is screwed into a smooth prepared hole of said output rod with tapping an internal thread in the inner peripheral surface of the smooth prepared hole, thereby fastening said adjusting rod to said output rod and said push rod transmits the output of said brake booster to a brake master cylinder. The push rod is characterized in that said internal thread is formed by squeezing the inner peripheral surface into roots of said external thread by said tapping and crests of said internal thread are flatly crushed by root bottoms, parallel to said axis, of said external thread, thereby preventing said second rod from getting loose.

In the self-tapping screw type fastener of the present invention having the aforementioned structure, the external thread of the second rod is screwed into the smooth prepared hole with tapping an internal thread in the inner peripheral surface of the smooth prepared hole, thereby fastening the second rod to the first rod. Between the internal thread of the first rod and the external thread of the second rod, the crests of the internal thread are flatly crushed by the root bottoms of the external thread so that the crests and the root bottoms are closely appressed to each other, thus providing the interference-fit structure, whereby the prevention of looseness of the screwed portion, i.e. the adjusting rod (self-tapping screw), can be achieved. In addition, the flank faces of the internal thread and the flank faces of the external thread are in close contact with each other, whereby the prevention of looseness of the screwed portion, i.e. the adjusting rod (self-tapping screw), can be achieved. The smooth guide shaft and the ridge of the internal thread which is the nearest from the smooth guide shaft come in contact with each other such that the edge portion of the step of the smooth guide shaft is embedded into the crest of the nearest flank surface of the internal thread, thereby achieving the prevention of looseness of the screwed portion, i.e. the second rod. Therefore, the structure for preventing the looseness of the second rod can be properly formed.

As the self-tapping screw type fastener of this embodiment having the proper structure for preventing the looseness is efficaciously adopted to a push rod for a brake booster which easily gets loose because it is subjected to impact intermittently, the push rod can be prevented from getting loose even though it is subjected to impact intermittently. Particularly, since the looseness of the adjusting rod which is the most important problem in push rods of brake boosters can be securely prevented, the automotive safety is also improved.

Further, the adjusting rod to be screwed into and fastened to the output rod is designed to function as a self-tapping screw, thereby reducing the cost.

Still other objects and advantages of the invention will in part be obvious and will in part be apparent from the specification.

The invention accordingly comprises the features of construction, combinations of elements, and arrangement of parts which will be exemplified in the construction hereinafter set forth, and the scope of the invention will be indicated in the claims.

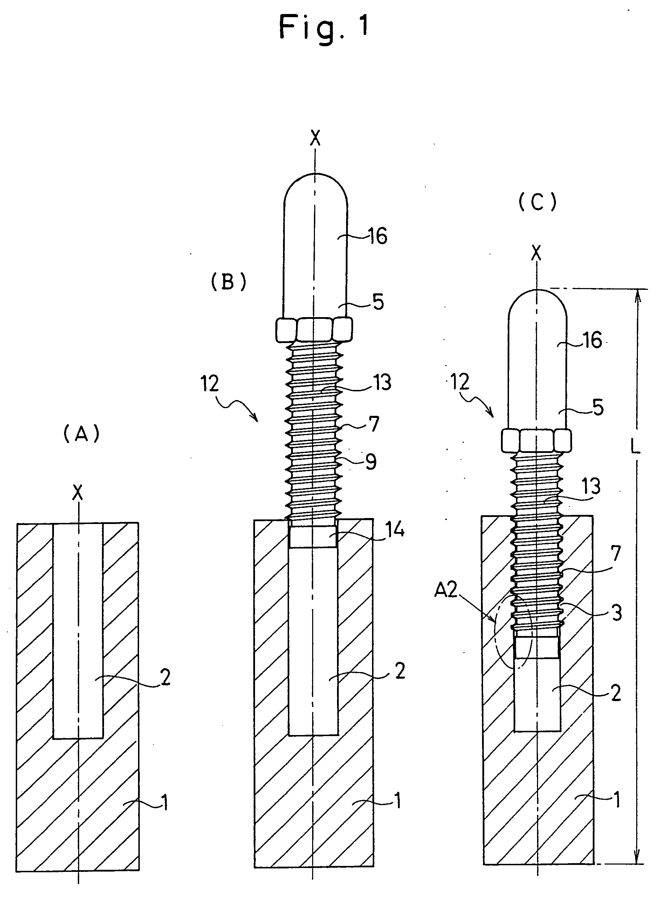

FIGS. 1(A)-1(C) show an embodiment of a self-tapping screw type fastener according to the present invention, wherein Fig. 1(A) is a sectional view of an output rod in a state before tapping, Fig. 1 (B) is an illustration showing a state just before the screwing of an adjusting rod (self-tapping screw) into the output rod, and Fig. 1(C) is an illustration showing a state that the adjusting rod (self-tapping screw) is screwed into and fastened to the output rod;

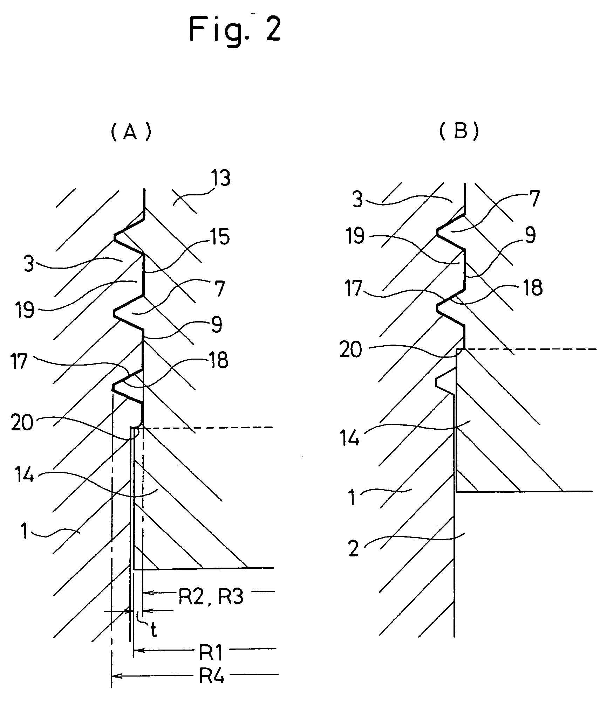

FIGS. 2(A)-2(B) shows a portion A2 in Fig. 1(C) in enlarged scale, wherein Fig. 2 (A) is an illustration showing a state that the adjusting rod (self-tapping screw) is screwed to a predetermined tapping depth and Fig. 2(B) is an illustration showing a state that the adjusting rod (self-tapping screw) is slightly turned in the reverse direction from the state shown in Fig. 2(A);

FIGS. 3(A)-3(D) show an example of a conventional push rod for a brake booster in an automotive brake system, wherein Fig. 3(A) is a sectional view of an output rod in a state before tapping, Fig. 3(B) is a sectional view of the output rod in a state after the tapping, Fig. 3(C) is a sectional view of the output rod in a state after reaming, and Fig. 3(D) is an illustration showing a state that the adjusting rod is screwed into and fastened to the output rod; and

FIG. 4 is a partly enlarged sectional view showing a portion A1 in Fig. 3(D).

Hereinafter, based on Figs. 1(A)-(C) and Figs. 2(A)-(B), an embodiment of a self-tapping screw type fastener according to the present invention will be described with respect to a case that the embodiment is adopted to a push rod for a brake booster in an automotive brake system. As mentioned above, an automotive brake system employs a brake booster which boosts pedaling force with negative pressure, compressed pneumatic pressure, or fluid pressure to output boosted pedaling force in order to produce sufficient braking force with small pedaling force exerted on a brake pedal. The brake booster transmits the boosted pedaling force to a master cylinder through a push rod.

As shown in Figs. 1(A) through 1(C), the push rod 12 comprises an output rod (first rod) 1 and an adjusting rod (second rod) 5 which is screwed into and fastened to the output rod 1 to extend from the distal end of the output rod 1 on the axis X. In this case, the length L of the push rod 12 in the direction of axis X can be adjusted according to the screwing depth of the adjusting rod 5 into the output rod 1.

The adjusting rod 5 is provided, on one end side, with a threaded shaft 13 on which an external thread 7 is formed and a smooth guide shaft 14 projecting from the end of the threaded shaft 13 in the direction of the same axis X, and on the other end side, with a pushing head 16 which is formed to extend on the same axis X as the threaded shaft 13 and acts on a master cylinder. In this case, the adjusting rod 5 is designed to function as a self-tapping screw because of the external thread 7. The pushing head 16 is designed to function as a head to be seated on the periphery of an opening for a smooth prepared hole (hole before threading) 2 in which an internal thread 3 is tapped.

At a root between adjacent ridges of the external thread 7, a root bottom 9 parallel to the axis X is composed of the surface of the threaded shaft 13. The outer diameter R1 of the smooth guide shaft 14 is smaller enough than the outer diameter R4 of the ridges of the external thread 7, i.e. the major diameter of the external thread 7, and is slightly larger than the outer diameter R2 of the roots 15 of the external thread 7, i.e. the minor diameter of the external thread 7, or the inner diameter R3 of the internal thread 3, i.e. the minor diameter of the internal thread 3, formed by tapping. Because of the diameter difference "t" between the outer diameter R1 and the outer diameter R2 or the inner diameter R3, an annular step 20 is formed at a connecting portion (boundary) between the smooth guide shaft 14 and the threaded shaft 13.

Between the smooth guide shaft 14 and the ridge of the internal thread 3 which is the nearest from the smooth guide shaft 14 (the deepest ridge of the internal thread 3), the step 20 of the smooth guide shaft 14 is engaged by slightly embedding an edge portion thereof into the crest of the flank face 17 of the nearest ridge of the internal thread 3, thereby preventing the adjusting rod (self-tapping screw) 5 from getting loose. Between the internal thread 3 and the external thread 7, the crests of the internal thread 3 which are formed by squeezing the inner peripheral surface into roots between the adjacent ridges of the external thread 7 are flatly crushed by the root bottoms 9 parallel with the axis X of the roots 15 of the external thread 7 so that the crests and the root bottoms are closely appressed to each other, thus providing an interference-fit structure. Therefore, the prevention of looseness of the screwed portion, i.e. the adjusting rod (self-tapping screw) 5, is achieved. At this point, since the crests of the internal thread 3 is flatly crushed by the root bottoms 9 of the external thread 7, flat faces 19 parallel to the axis X are formed on the crests of the internal thread 3. In addition, since the flank faces 17 of the internal thread 3 formed by the tapping and the flank faces 18 of the external thread 7 are in close contact with each other, the prevention of looseness of the screwed portion, i.e. the adjusting rod (self-tapping screw) 5, is achieved. In this manner, the push rod 12 has a fastener using the adjusting rod (self-tapping screw) 5.

The method of manufacturing the push rod 12 having the aforementioned structure will be described.

As shown in Fig. 1(A), similarly to the conventional one, first, the output rod 1 is prepared by forging or the like and a smooth prepared hole 2 extending in the direction of axis X is formed by drilling to have an opening in the distal end of the output rod 1. After that, as shown in Fig. 1(B), the smooth guide shaft 14 of the adjusting rod (self-tapping screw) 5 is inserted into the entrance of the smooth prepared hole 2 of the output rod 1 so that the adjusting rod (self-tapping screw) 5 is aligned i.e. stands upright relative to the smooth prepared hole 2. Then, as shown in Fig. 1(C), from the state that the adjusting rod (self-tapping screw) 5 is aligned, the threaded shaft 13 of the adjusting rod (self-tapping screw) 5 is screwed into the smooth prepared hole 2. During this, the threaded shaft 13 is screwed with tapping the internal thread 3 in the inner peripheral surface of the smooth prepared hole 2 by means of the external thread 7. When the tapping depth reaches to a depth which is longer than a desired tapping depth by a length corresponding to one pitch or more of the internal thread 3 so that the length of the push rod 12 becomes slightly shorter than the length L, the adjusting rod (self-tapping screw) 5 is slightly turned in the reverse direction. Thus, the adjusting rod (self-tapping screw) 5 projects slightly from the output rod 1 and the edge portion of the step 20 of the smooth shaft 14 is slightly embedded into the crest of the nearest flank face 17 of the internal thread 3 so that the smooth guide shaft 14 is engaged with the nearest ridge of the internal thread 3. At this point, the length of the push rod 12 is set to be the predetermined length L. In this manner, the push rod 12 with the fastener using the adjusting rod (self-tapping screw) 5 and having the predetermined length L is manufactured.

According to the self-tapping screw type fastener, between the internal thread 3 and the external thread 7, the crests of the internal thread 3 are flatly crushed by the root bottoms 9 of the external thread 7 so that the crests and the root bottoms are closely appressed to each other, thus providing the interference-fit structure, whereby the prevention of looseness of the screwed portion, i.e. the adjusting rod (self-tapping screw) 5, can be achieved. In addition, the flank faces 17 of the internal thread 3 and the flank faces 18 of the external thread 7 are in close contact with each other, whereby the prevention of looseness of the screwed portion, i.e. the adjusting rod (self-tapping screw) 5, can be achieved. Between the smooth guide shaft 14 and the nearest ridge (the deepest ridge of the internal thread 3) of the internal thread 3 relative to the smooth guide shaft 14, the edge portion of the step 20 of the smooth guide shaft 14 is embedded into the crest of the nearest flank surface 17 of the internal thread 3, thereby achieving the prevention of looseness of the screwed portion, i.e. the adjusting rod (self-tapping screw) 5. Therefore, the structure for preventing the looseness of the adjusting rod (self-tapping screw) 5 can be properly formed. As the self-tapping screw type fastener of this embodiment having the proper structure for preventing the looseness is efficaciously adopted to a push rod for a brake booster which easily gets loose because it is subjected to impact intermittently, the push rod can be prevented from getting loose even though it is subjected to impact intermittently. Particularly, since the looseness of the adjusting rod 5 which is the most important problem in push rods of brake boosters can be securely prevented, the automotive safety is also improved.

Further, the adjusting rod 5 to be screwed into and fastened to the output rod 1 is designed to function as a self-tapping screw, thereby reducing the cost.

Besides push rods for brake boosters just like the aforementioned embodiment, the self-tapping screw type fastener of the present invention can be efficaciously adopted to any fastener which is composed of two members to be screwed into and fastened to each other and which easily get loose.

## Claims

1. A self-tapping screw type fastener comprising: a first rod and a second rod which is screwed into and fastened to the first rod, has an external thread, and functions as a tapping screw, wherein the external thread of said second rod is screwed into a smooth prepared hole of said first rod with tapping an internal thread in the inner peripheral surface of the smooth prepared hole, thereby fastening said second rod to said first rod, said fastener being
**characterized in that**
said second rod has a threaded shaft having said external thread and a smooth guide shaft projecting from the end of the threaded shaft coaxially with the threaded shaft;
the outer diameter of said smooth guide shaft is set to be smaller than the major diameter of said external thread and to be larger than the minor diameter of said external thread and the minor diameter of said internal thread so as to form a step at a connecting portion between said smooth guide shaft and said threaded shaft; and
the step of said smooth guide shaft is in contact with the nearest ridge of said internal thread relative to said smooth guide shaft, thereby preventing said second rod from getting loose.

2. A self-tapping screw type fastener as claimed in claim 1, being **characterized in that** said internal thread is formed by squeezing the inner peripheral surface into roots of said external thread by said tapping and crests of said internal thread are flatly crushed by root bottoms, parallel to said axis, of said external thread, thereby preventing said second rod from getting loose.

3. A push rod to be used in a brake booster which boosts pedaling force exerted on a brake pedal to output the boosted force, said push rod comprising an output rod and an adjusting rod which is screwed into and fastened to said output rod, has an external thread, and functions as a tapping screw, wherein the external thread of said adjusting rod is screwed into a smooth prepared hole of said output rod with tapping an internal thread in the inner peripheral surface of the smooth prepared hole, thereby fastening said adjusting rod to said output rod and said push rod transmits the output of said brake booster to a brake master cylinder, said push rod being **characterized in that**
said adjusting rod has a threaded shaft having said external thread and a smooth guide shaft projecting from the end of the threaded shaft coaxially with the threaded shaft;
the outer diameter said smooth guide shaft is set to be smaller than the major diameter of said external thread and to be larger than the minor diameter of said external thread and the minor diameter of said internal thread so as to form a step at a connecting portion between said smooth guide shaft and said threaded shaft; and
the step of said smooth guide shaft is in contact with the nearest ridge of said internal thread relative to said smooth guide shaft, thereby preventing said adjusting rod from getting loose.

4. A push rod to be used in a brake booster which boosts pedaling force exerted on a brake pedal to output the boosted force, said push rod comprising an output rod and an adjusting rod which is screwed into and fastened to said output rod, has an external thread, and functions as a tapping screw, wherein the external thread of said adjusting rod is screwed into a smooth prepared hole of said output rod with tapping an internal thread in the inner peripheral surface of the smooth prepared hole, thereby fastening said adjusting rod to said output rod and said push rod transmits the output of said brake booster to a brake master cylinder, said push rod being **characterized in that**
said internal thread is formed by squeezing the inner peripheral surface into roots of said external thread by said tapping and crests of said internal thread are flatly crushed by root bottoms, parallel to said axis, of said external thread, thereby preventing said second rod from getting loose.
